# EUROPÄISCHE PATENTSCHRIFT

(11) **EP 2 298 086 B1**
(45) Veröffentlichungstag und Bekanntmachung des Hinweises auf die Patenterteilung: **04.07.2012**
(21) Anmeldenummer: 09011691.4
(22) Anmeldetag: 11.09.2009
(51) Int. Cl.: A23L 1/304, A23G 3/36, A23L 1/09, A23L 1/0522, A23L 2/60, A21D 2/02, A21D 2/18, C13B 50/00

(54) **Anreicherung raffinierter Kohlenhydrate mit Mineralstoffen**
Enriching refined carbohydrates with minerals
Enrichissement d'hydrates de carbone raffinés avec des matières minérales

(43) Veröffentlichungstag der Anmeldung: 23.03.2011
(73) Patentinhaber: Freidel, Harald, 73669 Lichtenwald (DE)
(72) Erfinder: Freidel, Harald, 73669 Lichtenwald (DE); Finke, Robert, 32312 Lübbecke (DE); Helmke, Hendrik, 65835 Liederbach (DE)
(74) Vertreter: Ricker, Mathias

(56) Entgegenhaltungen:
- WO-A1-00/10402
- WO-A1-99/26491
- CN-A- 1 500 402
- CN-A- 101 305 779
- US-A- 3 607 310
- US-A- 4 405 600
- US-A- 4 786 510

## Beschreibung

Die Erfindung betrifft die Anreicherung raffinierter Kohlenhydrate mit Mineralstoffen. Insbesondere betrifft die Erfindung die Anreicherung von Disacchariden wie Saccharose und Polysacchariden wie Stärke, Stärke vorzugsweise in Form von Getreidemehlen, mit einer Magnesiumverbindung oder einer Calciumverbindung oder einer Magnesiumverbindung und einer Calciumverbindung. Weitere Gegenstände der Erfindung betreffen die Verwendung der angereicherten raffinierten Kohlenhydrate zur Versorgung eines Lebewesens mit Magnesium oder Calcium oder Magnesium und Calcium, sowie die Verwendung der angereicherten Kohlenhydrate zur Herstellung von Nahrungsmitteln.

Magnesium und Calcium in Form geeigneter Verbindungen sind Mineralstoffe, die für den menschlichen Organismus essentiell sind. Beispielsweise enthält der Organismus eines Erwachsenen ungefähr 20 bis 30 g Magnesium, wobei 50 bis 70 % in den Knochen eingelagert sind. Bei einem Körpergewicht von 60 kg beträgt der Calciumanteil ungefähr 1 kg.

Darüber hinaus ist bekannt, dass Magnesium an einer Vielzahl enzymatischer Reaktionen beteiligt und unentbehrlich für den Stoffwechsel von Kohlenhydraten, Proteinen, Fetten und Nukleinsäuren ist. Es spielt eine wichtige Rolle für die Energieproduktion im Körper, für die Reizbarkeit von Muskeln und Nerven sowie für die Funktionstüchtigkeit des Herzens. Im menschlichen Körper kann eine Unterversorgung mit Magnesium zu erheblichen Beeinträchtigungen führen, wobei beispielhaft genannt sind die Neigung zu Muskelkrämpfen, übermäßige Müdigkeit und übermäßiges Schlafbedürfnis, Durchblutungsstörungen, etc.

Calcium wird insbesondere für den Aufbau von Knochen und Zähnen und zum Schutz vor Osteoporose benötigt. Es unterstützt aber auch vitale Funktionen wie zum Beispiel die Aktivierung von Enzymen, Leitung von Nervenimpulsen, Muskelkontraktion und Muskelwachstum, Regulierung des Herzschlags, Funktionstüchtigkeit von Zellmembranen, Energiebereitstellung, Ausschüttung von Hormonen und Neurotransmittern und die Blutgerinnung. Eine Unterversorgung mit Calcium kann diese Funktionen beeinträchtigen. Calcium ist auch wichtig zur Vorbeugung von Herz-/Kreislauferkrankungen sowie zur Senkung des Blutdrucks.

Magnesium- und Calciumverbindungen sind u.a. Bestandteile von Naturprodukten, die ihrerseits Ausgangsprodukte für die Herstellung einer Vielzahl von Nahrungsmitteln sind, und über die ein wesentlicher Teil der Ernährung des Menschen erfolgt. Beispielsweise sind sie Bestandteil zuckerhaltiger Pflanzen wie Zuckerrohr oder Zuckerrüben, oder sind Bestandteil von Getreidekörnern, insbesondere Bestandteil der Schalen der Getreidekörner.

Bei der Gewinnung von Zucker aus zuckerhaltigen Pflanzen bzw. Mehl aus Getreidekörnern werden im Verlauf der technischen Verarbeitung bzw. sind als Resultat der technischen Verarbeitung diese wichtigen Mineralstoffe aus den entsprechenden verkaufsfähigen Erzeugnissen weitgehend oder sogar völlig entfernt. Sie stehen damit für eine ausgewogene Ernährung über derartige Produkte nicht mehr zur Verfügung.

Bekanntlich werden bei der Zuckerherstellung Zuckerrüben oder Zuckerrohrpflanzen zerkleinert und aus den Schnitzeln mittels heißem Wasser der Zucker extrahiert. Nach einer Reihe von Folgeschritten, wie beispielsweise Filtration, Behandeln mit Schwefeldioxid, Aufkonzentrieren, Kristallisation, Zentrifugation, wobei einzelne Schritte auch wiederholt werden können, wird Zucker in der gewünschten Reinheit erhalten. Bei dieser Raffination werden auch Reste von Produkten, die in den Pflanzen enthalten sein können und die im menschlichen Körper als Schadstoffe wirken, wie beispielsweise Reste oder Abbauprodukte von Düngemitteln und Pflanzenschutzmitteln, aus dem Endprodukt entfernt. Allerdings werden dabei auch die meisten im Ausgangsprodukt vorhandenen natürlichen Inhaltsstoffe, die für die menschliche Ernährung wertvoll sind, vollständig entfernt. Als Folge dieser Raffination sind im raffinierten Zucker weder Magnesium noch Calcium enthalten, die für die menschliche Ernährung essentiell sind. Desgleichen wird beim Mahlen von Getreidekörnern, insbesondere bei niedrigem Ausmahlungsgrad, im resultierenden Mehl, das wie vom Verbraucher gewünscht relativ hell und reich an Stärke sein soll, vorab die Schale der Getreidekörner entfernt, und damit auch der größte Anteil der darin enthaltenen Mineralstoffe. Dies führt zu einem signifikanten Absinken des Magnesium- bzw. Calciumgehalts in derartig hergestelltem Getreidemehl. Abhängig vom Ausmahlungsgrad können 50 % und mehr des ursprünglich vorhandenen Magnesiums und Calciums im Mahlprozess verloren gehen.

Beruhend auf den Zufuhrempfehlungen der Deutschen Gesellschaft für Ernährung (DGE) liegt die von einem Erwachsenen benötigte tägliche Menge an Magnesium zwischen 350 und 400 mg und für Calcium bei etwa 1.000 mg.

Demzufolge enthalten raffinierte Kohlenhydrate, insbesondere Zucker und Getreidemehl, die als Grundnahrungsmittel bezeichnet werden können, und die ihrerseits zur Herstellung weiterer Lebensmittel verwendet werden, einen Gehalt an Magnesium oder Calcium bzw. Magnesium und Calcium, der im Rahmen einer mengenmäßig normalen Ernährung zur Deckung des vom menschlichen Organismus benötigten Mineralstoffgehalts ungenügend ist.

Aus CN 101305779 ist ein Verfahren bekannt, welches es ermöglicht, einen calciumhaltigen Zucker herzustellen durch Vermischung von 99.75 bis 99.88 Gew.-% Zucker mit 0.12 bis 0.25 Gew.-% Calciumlactat.

Weiterhin sind im Stand der Technik Zucker beschrieben, welche mit Mineralstoffverbindungen, insbesondere mit Calcium- und/oder Magnesiumverbindungen angereichert sind.

So offenbart etwa WO 00/10402 eine Zusammensetzung aus einer Calciumquelle und einem Oligosaccharid, wobei das Verhältnis von Calciumquelle zu Oligosaccharid 1:2 bis 2:1, was einem Anteil von 33 - 66- Gew.-% an Calcium entspricht, betragen kann.

US 3 607 310 beispielsweise Zuckerprodukte welche, neben weiteren Verbindungen, Calciumlactat und Magnesiumsulfat enthalten.

Weiterhin offenbart WO 99/26491 eine Zusammensetzung auf Basis eines Fettes und eines Kohlenhydrates, wobei die Zusammensetzung Magnesiumphosphat und Calciumcarbonat enthalten kann.

Es ist auch bekannt, mineralstoffreiches Mineralwasser zur Bedarfsdeckung mit Magnesium und Calcium zu verwenden. Da die Gehalte im Wasser relativ gering sind, und das Wasser den Magen-/Darmtrakt relativ schnell passiert, kann Mineralwasser den Magnesiummangel bzw. Calciummangel letztendlich kaum effektiv verhindern.

Es sind auch Nahrungsergänzungsmittel bekannt, die Magnesium bzw. Calcium enthalten. Diese Produkte in Form von Tabletten oder Granulaten müssen in Wasser aufgelöst und regelmäßig getrunken oder auch in Form von Pulvern eingenommen werden.

Die vorliegende Erfindung stellt sich die Aufgabe, Magnesium- oder Calciumverbindungen oder Magnesium- und Calciumverbindungen in einer Form zur Verfügung zu stellen, die eine gleichmäßige und ausreichende Zufuhr dieser Mineralstoffe an den menschlichen Organismus gewährleistet.

Diese Aufgabe wird durch ein Verfahren zur Herstellung eines Gemischs im Wesentlichen bestehend aus einem raffinierten Kohlenhydrat und einer Magnesiumverbindung und einer Calciumverbindung, umfassend:
(i) Mischen eines raffinierten Kohlenhydrats mit einer Magnesiumverbindung und einer Calciumverbindung,
wobei das raffinierte Kohlenhydrat ein Mehrfachzucker ist; und
der Begriff "raffiniertes Kohlenhydrat" bedeutet, dass ein natürlich vorkommendes Kohlenhydrat, auch als Saccharid bezeichnet, einer Raffination unterzogen wird, um es in Form eines raffinierten Produkts dem Verbraucher in konzentrierter und gereinigter Form zur Verfügung zu stellen, wobei die Raffination in Form eines oder mehrerer Verfahrensschritte erfolgt ausgewählt aus der Gruppe von Verfahrensschritten umfassend: Extraktion, Kristallisation, Zentrifugation, Mahlen, Sieben, chemische Umwandlung; und
der Begriff "im Wesentlichen bestehend aus" bedeutet, dass im raffinierten Produkt Substanzen vorhanden sein können, die keine Kohlenhydrate oder Magnesium- oder Calciumverbindungen sind, die aber beim Raffinationsprozess des Kohlenhydrats durch die Raffination nicht aus diesem entfernt werden;
dadurch gekennzeichnet, dass
der Gehalt an Magnesiumverbindung 0,5 - 3,5 Gew.-% und der Gehalt an Calciumverbindung 1 - 5 Ges.-% beträgt bezogen auf die Gesamtmenge an Gemisch;
wobei die Magnesiumverbindung und die Calciumverbindung unabhängig voneinander ausgewählt sind aus der Gruppe bestehend aus einem Hydrogencarbonat, einem Carbonat, einem Phosphat, einem Halogenid, einem Oxid, einem Hydroxid, einem Tartrat, einem Citrat, einem Gluconat, einem Lactat des Magnesiums oder Calciums, oder einem Gemisch aus zwei oder mehreren dieser Verbindungen.

In einer Ausführungsform besteht das Verfahren aus Stufe (i), oder besteht im Wesentlichen aus Stufe (i).

Der Begriff "im Wesentlichen bestehend" bedeutet, dass im Gemisch auch andere Komponenten als das raffinierte Kohlenhydrat und Magnesium- oder Calciumverbindungen oder Magnesium- und Calciumverbindung vorhanden sein können unter der Voraussetzung, dass die materiellen Eigenschaften der Zusammensetzung durch deren Vorhandensein nicht beeinträchtigt werden. Beispielsweise können Substanzen vorhanden sein, die keine Kohlenhydrate oder Magnesium- oder Calciumverbindungen sind, die aber beim Raffinationsprozess des Kohlenhydrats durch die Raffination nicht aus diesem entfernt werden. Beispielweise können die raffinierten Kohlenhydrate wasserhaltig sein, oder wie im Falle von Getreidemehl auch Proteine und unverdauliche Ballaststoffe wie beispielsweise Cellulose, enthalten. Der Wassergehalt beträgt hier etwa 15 %.

Der Begriff "raffiniertes Kohlenhydrat" bedeutet, dass ein natürlich vorkommendes Kohlenhydrat, auch als Saccharid bezeichnet, einem Behandlungsschritt unterzogen wird. Diese Raffination ermöglicht die Isolierung des Kohlenhydrats, um es in Form eines raffinierten Produkts dem Verbraucher in konzentrierter und gereinigter Form zur Verfügung zu stellen.

Die Raffination erfolgt dabei vorzugsweise in Form eines oder mehrerer Verfahrensschritte ausgewählt aus der Gruppe von Verfahrensschritten umfassend: Extraktion, Kristallisation, Zentrifugation, Mahlen, Sieben, chemische Umwandlung, oder eine Kombination von zwei oder mehreren dieser Verfahrensschritte.

Die Begriffe "Extraktion", "Kristallisation", "Zentrifugation", "Mahlen", "Sieben" sind dem Fachmann bekannt.

Der Begriff "chemische Umwandlung" bedeutet, dass das Kohlenhydrat einer chemischen Reaktion unterzogen wird, d.h. die Molekülstruktur des Kohlenhydrats verändert wird.

Die Raffination eines Kohlenhydrats in Form zuckerhaltiger Pflanzen, vorzugsweise Zuckerrohrpflanzen oder Zuckerrüben, zu Zucker oder die Raffination eines Kohlenhydrats in Form von Getreidekörnern zu Mehl ist dem Fachmann bekannt und/oder kann in der eingangs erwähnten Weise erfolgen.

Der Begriff "Mischen" bedeutet, dass ein raffiniertes Kohlenhydrat mit einer Magnesiumverbindung oder einer Calciumverbindung oder einer Magnesiumverbindung und einer Calciumverbindung in Kontakt gebracht wird. Das Mischen oder Inkontaktbringen der Komponenten kann in einer geeigneten Mischanlage erfolgen, vorzugsweise in einem Gefäß, das mit einem Rührwerk ausgestattet ist. Vorzugsweise werden das raffinierte Kohlenhydrat und die Mineralstoffe jeweils in fester Form miteinander vermischt.

Das im erfindungsgemäßen Verfahren eingesetzte Kohlenhydrat ist ein Mehrfachzucker.

Der Begriff "Mehrfachzucker" bedeutet, dass im Zuckermolekül mindestens zwei Einfachzucker kovalent über eine glykosidische Bindung miteinander verknüpft sind.

Statt des Begriffs "Mehrfachzucker" wird auch synonym der Begriff "Polysaccharid" verwendet. Der Begriff Polysaccharid" schließt den Begriff "Oligosaccharid° mit ein.

Die erfindungsgemäß verwendete kleinste Zuckereinheit ist ein "Zweifachzucker" oder auch "Disaccharid". Ein Disaccharid ist somit aus zwei Einfachzuckern (Monosaccharide) aufgebaut.

Vorzugsweise ist das Disaccharid ausgewählt aus der Gruppe bestehend aus Maltose, Cellobiose, Isomaltose, Gentiobiose, Trehalose, Saccharose, Lactose, Laminaribiose.

Diese Disaccharide sind natürlich vorkommende Verbindungen oder können nach Verfahren erhalten werden, die dem Fachmann bekannt sind.

Ein besonders bevorzugtes Disaccharid ist Saccharose.

Synonym zum Begriff "Saccharose" wird auch der Begriff "Sucrose" verwendet.

Saccharose wird im Handel unter einer Vielzahl verschiedener Bezeichnungen und Formen angeboten, die dem Fachmann bekannt sind, beispielsweise als Basterdzucker, Brauner Zucker, Dekorierzucker, Demerara-Zucker, Einmachzucker, Farin, flüssiger Zucker, Grieszucker, Hagelzucker, Instantzucker, Kandisfarin, Kandiszucker, Karamell, Castorzucker, Leuterzucker, Melasse, Puderzucker, Perlzucker, Raffinade, Teezucker, Weißzucker, Würfelzucker, Zuckerstreusel.

Ferner sind im Rahmen der vorliegenden Erfindung auch zuckerhaltige Gemische geeignet, die mit Hilfe raffinierten Zuckers hergestellt werden, wie beispielsweise Vanillezucker, Fondant sowie Gelierzucker. Die Herstellung dieser Zucker sowie ihre Zusammensetzung sind dem Fachmann bekannt.

Vorzugsweise liegt die verwendete Saccharose als Kristallzucker vor. Synonym zum Begriff "Kristallzucker" wird auch der Begriff "Raffinade" verwendet. Dieser Zucker ist der gebräuchliche weiße Haushaltszucker, der zur Herstellung von Nahrungsmitteln bzw. zum Süßen von Getränken vielfältige Anwendungsmöglichkeiten findet.

Saccharose kann vorzugsweise durch Raffination zuckerhaltiger Pflanzen wie Zuckerrüben oder Zuckerrohrpflanzen erhalten werden.

Erfindungsgemäß können auch Saccharide mit mehr als zwei Zuckereinheiten eingesetzt werden.

Polysaccharide sind somit auch Tri-, Tetra-, Penta-, Hexasaccharide, usw.

Ein bevorzugtes Polysaccharid ist Stärke.

In einer Ausführungsform wird die Stärke aus Samen gewonnen. Vorzugsweise werden als Samen Getreidekörner verwendet, wobei das raffinierte Kohlenhydrat in Form von Mehl vorliegt.

In einer weiteren bevorzugten Ausführungsform der vorliegenden Erfindung ist das raffinierte Kohlenhydrat somit ein Getreidemehl.

Der Begriff "Getreidemehl" bezeichnet das durch das Mahlen von Getreidekörnern entstehende Pulver.

Vorzugsweise wird das Getreidemehl ausgewählt aus der Gruppe bestehend aus Weizen-, Dinkel-, Roggen-, Hafer-, Gerste-, Hirse-, Mais-, Reismehl, oder einer Mischung aus zwei oder mehr dieser Mehlsorten. Wie bereits oben erwähnt, besitzen diese Mehlsorten neben Kohlenhydraten im Allgemeinen auch Anteile an Proteinen und unverdaulichen Ballaststoffen wie beispielsweise Cellulose, sowie einen Wassergehalt von etwa 15 %.

Die Magnesiumverbindung bzw. die Calciumverbindung liegt vorzugsweise in einer Form vor, die vom menschlichen Organismus leicht aufgenommen werden kann. Dementsprechend ist die Verwendung von Hydrogencarbonaten, Carbonaten, Phosphaten, Halogeniden, Oxiden und Hydroxiden sowie von Tartraten, Citraten, Gluconaten, oder Lactaten bevorzugt. Falls im Verfahren der vorliegenden Erfindung ein Gemisch von Magnesium- und Calciumverbindungen eingesetzt werden soll, können die entsprechenden Hydrogencarbonate, Carbonate, Phosphate, Halogenide, Oxide und Hydroxide sowie Tartrate, Citrate, Gluconate oder Lactate unabhängig voneinander ausgewählt werden, d.h. es kann beispielsweise ein Magnesiumcitrat und ein Calciumcarbonat eingesetzt werden.

Vorzugsweise liegen sowohl die Magnesium- wie auch die Caciumverbindung als Carbonat vor.

In einer bevorzugten Ausführungsform weisen die für die Anreicherung vorgesehenen Magnesium- und/oder Calciumverbindungen Teilchengrößen auf, die eine möglichst homogene Verteilung im Polysaccharid durch Mischen erlauben. Dies ist auch insbesondere für die weiter unten aufgeführten Verwendungen als Nahrungsmittel oder in Nahrungsmittel wichtig. Hier sollte beispielsweise bei einer Verwendung in einer Flüssigkeit keine Sedimentation als Folge zu großer Teilchen eintreten.

Auch für die Verwendbarkeit eines Gemischs, das nach dem erfindungsgemäßen Verfahren hergestellt wird, in Babynahrung, Cerealien, Käse (Sauermilch-/Streichkäse), Vitaminmischungen und Nahrungsmittelergänzungsprodukten (Pulver/Tabletten) ist die Korngrößenverteilung wichtig.

Vorzugsweise weisen im Falle der Magnesiumverbindungen, vorzugsweise von Magnesiumcarbonat, 100 % der Teilchen einen Durchmesser von kleiner als 90 µm, vorzugsweise kleiner als 87 µm auf, gemessen nach der Laserbeugungsmethode. Zur Messung wird ein Helos H0069-Gerät verwendet.

Vorzugsweise weisen dann 90 % der Teilchen einen Durchmesser von kleiner als 26 µm, 80 % der Teilchen einen Durchmesser von kleiner als 22 µm, 50 % der Teilchen einen Durchmesser von kleiner als 16 µm, 20 % der Teilchen einen Durchmesser von kleiner als 10 µm und 10 % der Teilchen einen Durchmesser von kleiner als 7 µm auf.

Vorzugsweise weisen im Falle der Calciumverbindungen, vorzugsweise von Calciumcarbonat, 100 % der Teilchen einen Durchmesser von kleiner als 60 µm auf gemessen mit einem Coulter-Counter.

Vorzugsweise weisen dann 90 % der Teilchen einen Durchmesser von kleiner als 29 µm, 50 % der Teilchen einen Durchmesser von kleiner als 9 µm, 25 % der Teilchen einen Durchmesser von kleiner als 4 µm und 10 % der Teilchen einen Durchmesser von kleiner als 2 µm auf.

Produkte mit geeigneter Korngrößenverteilung können vorzugsweise durch Sichter- und Separationsverfahren erhalten werden. Derartige Verfahren und Vorrichtungen zur Durchführung der Verfahren sind dem Fachmann bekannt.

Vorzugsweise liegen bei Einsatz eines Gemisches an Magnesiumverbindung und Calciumverbindung diese in einem Formelgewichtsverhältnis von 1 : (1,5 - 3) vor (bezogen auf das Formelgewichtsverhältnis von Magnesiumverbindung zur Calciumverbindung).

Weiter bevorzugt liegt ein Formelgewichtsverhältnis von etwa 1 : 2 vor.

Vorzugsweise wird das Kohlenhydrat mit der Magnesiumverbindung und/oder der Calciumverbindung so vermischt, dass ein Gehalt an Magnesiumverbindungen, vorzugsweise Magnesiumcarbonat, von 0,5 Gew.-% - 3,5 Gew.-% und/oder ein Gehalt an Calciumverbindungen, vorzugsweise Calciumcarbonat, von 1 - 5 Gew.-% bezogen auf die Gesamtmenge an Gemisch vorliegt.

Weiter bevorzugt liegt ein Gehalt an Magnesiumverbindungen von 0,75 - 3,0 Gew.-% und/oder ein Gehalt an Calciumverbindungen von 1,25 - 4 Gew.-% bezogen auf die Gesamtmenge an Gemisch vor.

Weiter bevorzugt liegt ein Gehalt an Magnesiumverbindungen von 1,0 - 2,0 Gew.-% und/oder ein Gehalt an Calciumverbindungen von 1,5 - 2,5 Gew.-% bezogen auf die Gesamtmenge an Gemisch vor.

Bevorzugte Gemische, welche nach dem erfindungsgemäßen Verfahren hergestellt werden, weisen einen Gehalt von 2,0 - 2,5 Gew.-% an Magnesiumverbindungen, vorzugsweise Magnesiumcarbonat, und einen Gehalt von 3,75 - 4,25 Gew.-% an Calciumverbindungen, vorzugsweise Calciumcarbonat, bezogen auf die Gesamtmenge an Gemisch auf. Ein solches Gemisch vermag den täglichen Gesamtbedarf eines Menschen an Magnesium und Calcium weitgehend zu decken unter der Annahme, dass ein Mensch täglich ca. 60 g des Gemischs, beispielsweise in Form eines Nahrungsmittels, aufnimmt.

Weiter bevorzugt sind auch Gemische, welche nach dem erfindungsgemäßen Verfahren hergestellt werden, welche einen Gehalt von 1,0 - 1,25 Gew.-% an Magnesiumverbindungen, vorzugsweise Magnesiumcarbonat, und einen Gehalt von 1,75 - 2,25 Gew.-% an Calciumverbindungen, vorzugsweise Calciumcarbonat, bezogen auf die Gesamtmenge an Gemisch aufweisen. Ein solches Gemisch vermag den täglichen Gesamtbedarf eines Menschen an Magnesium und Calcium zu etwa 50 % zu decken unter der Annahme, dass ein Mensch täglich ca. 60 g des Gemischs, beispielsweise in Form eines Nahrungsmittels, aufnimmt, und Mineralstoffe auch über andere Nahrungsmittel, die frei von Gemischen sind, die nach dem erfindungsgemäßen Verfahren hergestellt werden, zugeführt werden.

Weiter bevorzugt sind auch Gemische, welche nach dem erfindungsgemäßen Verfahren hergestellt werden, welche einen Gehalt von 0,50 - 0,60 Gew.-% an Magnesiumverbindungen, vorzugsweise Magnesiumcarbonat, und einen Gehalt von 0,90 - 1,10 Gew.-% an Calciumverbindungen, vorzugsweise Calciumcarbonat, aufweisen bezogen auf die Gesamtmenge an Gemisch. Ein solches Gemisch vermag den täglichen Gesamtbedarf eines Menschen an Magnesium und Calcium zu etwa 50 % zu decken unter der Annahme, dass ein Mensch täglich ca. 120 g des Gemischs, beispielsweise in Form eines Nahrungsmittels, aufnimmt, und Mineralstoffe auch über andere Nahrungsmittel, die frei von Gemischen sind, die nach dem erfindungsgemäßen Verfahren hergestellt werden, zugeführt werden.

Falls erforderlich, können jedoch auch höhere oder niedrigere Mengen an Magnesium- und/oder Calciumverbindungen dem Kohlenhydrat zugemischt werden. Vorzugsweise weist dann das Gemisch einen Gehalt an Magnesiumverbindung von 0,1 - 5 Gew.-% auf und/oder einen Gehalt an Calciumverbindung von 0,5 - 7,0 Gew.-%.

In einer weiteren Ausführungsform umfasst das erfindungsgemäße Verfahren Schritt (ii):
(ii) Konfektionieren des in Stufe (i) hergestellten Gemischs.

Der Begriff "Konfektionieren" bedeutet, dass das in Stufe (i) erhaltene Gemisch weiter verarbeitet wird. Weitere Verarbeitungsschritte sind vorzugsweise Mahlen, Verfestigen, Abfüllen in geeignete Gebinde.

Geeignete Gebinde sind beispielsweise Silos, Säcke, Tüten oder Beutel.

In einer besonders bevorzugten Ausführungsform wird das zuckerhaltige Gemisch zu Würfeln verfestigt, etwa durch Pressen. Es entspricht dann in seiner äußeren Erscheinungsform dem bekannten Würfelzucker.

Ein weiterer Gegenstand der vorliegenden Erfindung betrifft auch ein Gemisch bestehend im Wesentlichen aus einem raffinierten Kohlenhydrat und einer Magnesiumverbindung oder einer Calciumverbindung oder einer Magnesiumverbindung und einer Calciumverbindung, wobei das raffinierte Kohlenhydrat Saccharose ist.

Ein weiterer Gegenstand der vorliegenden Erfindung betrifft auch die Verwendung eines Gemischs hergestellt nach dem erfindungsgemäßen Verfahren oder eines erfindungsgemäßen Gemischs zur Versorgung eines Lebewesens, insbesondere eines Menschen, mit Magnesium oder Calcium oder Magnesium und Calcium (in Form geeigneter Verbindungen).

Dies kann etwa dadurch erfolgen, dass ein erfindungsgemäßes Gemisch oder ein Gemisch, welches nach dem erfindungsgemäßen Verfahren hergestellt ist, zur Herstellung von Nahrungsmitteln verwendet wird.

Geeignete Nahrungsmittel sind alle Nahrungsmittel, zu deren Herstellung ein raffiniertes Kohlenhydrat in Form eines Mehrfachzuckers, vorzugsweise Saccharose oder Stärke, insbesondere in Form von Getreidemehl, eingesetzt werden kann.

Vorzugsweise wird ein derartiges Gemisch für die Herstellung anderer Nahrungsmittel verwendet, beispielsweise zur Herstellung von Backwaren.

Der Begriff "Backware" ist der Oberbegriff für Lebensmittel aus Getreide oder Getreideerzeugnissen, die gebacken werden. Grob eingeteilt werden sie in die Gruppen Brot, Kleingebäck und Feingebäck. Kleingebäck sind etwa Brötchen, Feingebäck beispielsweise Kuchen.

Ein Gemisch im Wesentlichen bestehend aus einem durch Raffination gewonnen Zucker, insbesondere Saccharose, und einer Magnesiumverbindung oder einer Calciumverbindung oder einer Magnesiumverbindung und einer Calciumverbindung, wird vorzugsweise auch zum Süßen von Getränken verwendet.

Weitere Gegenstände der vorliegenden Erfindung betreffen dem gemäß die Verwendung eines zuckerhaltigen Gemischs hergestellt nach dem erfindungsgemäßen Verfahren oder eines erfindungsgemäßen zuckerhaltigen Gemischs zum Süßen eines Getränks bzw. zum Herstellen einer Backware.

Da das nach dem erfindungsgemäßen Verfahren erhältliche Gemisch im Wesentlichen bestehend aus einem raffinierten Kohlenhydrat und einer Magnesiumverbindung oder einer Calciumverbindung oder einer Magnesiumverbindung und einer Calciumverbindung in Nahrungsmitteln verwendet werden kann, die als Hauptnahrungsmittel für die Ernährung des menschlichen Organismus verwendet werden, ist eine gleichmäßige und stetige Zufuhr von Magnesiumverbindungen oder Magnesiumverbindungen und Calciumverbindungen möglich. Diese erlaubt es, den für eine ausgewogene Ernährung und das Wohlbefinden erforderlichen entsprechenden Mineralstoffpegel aufrecht zu erhalten.

## Patentansprüche

1. Verfahren zur Herstellung eines Gemischs im Wesentlichen bestehend aus einem raffinierten Kohlenhydrat und einer Magnesiumverbindung und einer Calciumverbindung, umfassend:
(i) Mischen eines raffinierten Kohlenhydrats mit einer Magnesiumverbindung und einer Calciumverbindung,
wobei das raffinierte Kohlenhydrat ein Mehrfachzucker ist; und
der Begriff "raffiniertes Kohlenhydrat" bedeutet, dass ein natürlich vorkommendes Kohlenhydrat, auch als Saccharid bezeichnet, einer Raffination unterzogen wird, um es in Form eines raffinierten Produkts dem Verbraucher in konzentrierter und gereinigter Form zur Verfügung zu stellen, wobei die Raffination in Form eines oder mehrerer Verfahrensschritte erfolgt ausgewählt aus der Gruppe von Verfahrensschritten umfassend: Extraktion, Kristallisation, Zentrifugation, Mahlen, Sieben, chemische Umwandlung; und
der Begriff "im Wesentlichen bestehend aus" bedeutet, dass im raffinierten Produkt Substanzen vorhanden sein können, die keine Kohlenhydrate oder Magnesium- oder Calciumverbindungen sind, die aber beim Raffinationsprozess des Kohlenhydrats durch die Raffination nicht aus diesem entfernt werden;
**dadurch gekennzeichnet, dass**
der Gehalt an Magnesiumverbindung 0,5 - 3,5 Gew.-% und der Gehalt an Calciumverbindung 1 - 5 Gew.-% beträgt bezogen auf die Gesamtmenge an Gemisch;
wobei die Magnesiumverbindung und die Calciumverbindung unabhängig voneinander ausgewählt sind aus der Gruppe bestehend aus einem Hydrogencarbonat, einem Carbonat, einem Phosphat, einem Halogenid, einem Oxid, einem Hydroxid, einem Tartrat, einem Citrat, einem Gluconat, einem Lactat des Magnesiums oder Calciums, oder einem Gemisch aus zwei oder mehreren dieser Verbindungen.

2. Verfahren nach Anspruch 1, wobei das raffinierte Kohlenhydrat ein Zweifachzucker ist.

3. Verfahren nach Anspruch 1 oder 2, wobei das raffinierte Kohlenhydrat Saccharose ist.

4. Verfahren nach Anspruch 1, wobei das raffinierte Kohlenhydrat eine Stärke ist.

5. Verfahren nach Anspruch 1 oder 4, wobei die Stärke ein Getreidemehl ist ausgewählt ist aus der Gruppe bestehend aus Weizen-, Dinkel-, Roggen-, Hafer-, Gerste-, Hirse-, Mais-, Reismehl, oder einer Mischung aus zwei oder mehr davon.

6. Verfahren nach einem der vorstehenden Ansprüche, wobei die Magnesiumverbindung und die Calciumverbindung ausgewählt sind aus Magnesium- und Calciumcarbonat.

7. Verfahren nach einem der vorstehenden Ansprüche, wobei die Magnesiumverbindung und die Calciumverbindung in einem Formelgewichtsverhältnis von 1 : (1,5 - 3) zugemischt werden.

8. Verfahren nach einem der vorstehenden Ansprüche, **dadurch gekennzeichnet, dass** 100 % der Teilchen der Magnesiumverbindung einen Durchmesser von kleiner als 90 µm aufweisen gemessen nach der Laserbeugungsmethode und/oder dass 100 % der Teilchen der Calciumverbindung einen Durchmesser von kleiner als 60 µm aufweisen gemessen mit einem Coulter-Counter.

9. Verfahren nach einem der vorstehenden Ansprüche, weiter umfassend Schritt (ii):
(ii) Konfektionieren des in Stufe (i) hergestellten Gemischs.

10. Gemisch im Wesentlichen bestehend aus einem raffinierten Kohlenhydrat und einer Magnesiumverbindung und einer Calciumverbindung wie in einem der Ansprüche 1 bis 9 definiert, wobei das raffinierte Kohlenhydrat Saccharose ist.

11. Verwendung eines Gemischs hergestellt nach einem Verfahren wie in einem der Ansprüche 1 bis 9 definiert, oder eines Gemischs nach Anspruch 10, zur Versorgung eines Lebewesens mit Magnesium oder Calcium oder Magnesium und Calcium.

12. Verwendung eines Gemischs hergestellt nach einem Verfahren wie in einem der Ansprüche 1 bis 9 definiert, oder eines Gemischs nach Anspruch 10, zur Herstellung von Nahrungsmitteln.

13. Verwendung nach Anspruch 12, oder Verwendung eines Gemischs nach Anspruch 10, zum Herstellen einer Backware.

14. Verwendung eines Gemischs hergestellt nach einem Verfahren wie in einem der Ansprüche 2 oder 3 definiert, oder eines Gemischs nach Anspruch 10, zum Süßen eines Getränks.

## Claims

1. Method of manufacturing a mixture, which substantially consists of a refined carbohydrate and a magnesium compound and a calcium compound, comprising:
(i) mixing a refined carbohydrate with a magnesium compound and a calcium compound,
wherein the refined carbohydrate is an oligosaccharide; and
the term "refined carbohydrate" means that a naturally occurring carbohydrate, also termed as saccharide, is subjected to a refining process in order to provide it in form of a refined product to the consumer in a concentrated and purified form, wherein the refining process is effected in form of one or several process steps selected from the group of process steps comprising: extraction, crystallization, centrifugation, milling, sieving, chemical conversion; and
the term "substantially consisting of" means that in the refined product substances may be present, which are no carbohydrates or magnesium compounds or calcium compounds, which, however, are not removed in the refining process of the carbohydrate from the carbohydrate by means of said refining process;
**characterized in that**
the amount of magnesium compound is of from 0.5 to 3.5 weight-% and the amount of calcium compound is of from 1 to 5 weight-% based on the total amount of the mixture;
wherein the magnesium compound and the calcium compound are independently selected from each other from the group consisting of a hydrogen carbonate, a carbonate, a phosphate, a halogenide, an oxide, a hydroxide, a tartrate, a citrate, a gluconate, a lactate of magnesium or calcium, or a mixture of two or more of these compounds.

2. Method according to claim 1, wherein the refined carbohydrate is a disaccharide.

3. Method of claim 1 or 2, wherein the refined carbohydrate is saccharose.

4. Method according to claim 1, wherein the refined carbohydrate is a starch.

5. Method according to claim 1 or 4, wherein the starch is a cereal flour selected from the group consisting of wheat flour, spelt flour, rye flour, oat flour, barley flour, millet flour, corn flour, rice flour, or a mixture of two or more thereof.

6. Method according to any one of the preceding claims, wherein the magnesium compound and the calcium compound are selected from magnesium carbonate and calcium carbonate.

7. Method according to any one of the preceding claims, wherein the magnesium compound and the calcium compound are admixed in a formula weight ratio of from 1 : (1.5 - 3).

8. Method according to any one of the preceding claims, **characterized in that** 100 % of the particles of the magnesium compound have a diameter of less than 90 µm measured according to the laser diffraction method and/or that 100 % of the particles of the calcium compound have a diameter of less than 60 µm measured with a Coulter counter.

9. Method according to any one of the preceding claims, further comprising step (ii):
(ii) converting the mixture produced in step (i).

10. Mixture, the mixture substantially consisting of a refined carbohydrate and a magnesium compound and a calcium compound as defined in any one of claims 1 to 9, wherein the refined carbohydrate is saccharose.

11. Use of a mixture produced according to a method as defined in any one of claims 1 to 9, or use of a mixture according to claim 10, for supplying a creature with magnesium or calcium or magnesium and calcium.

12. Use of a mixture produced according to a method as defined in any one of claims 1 to 9, or use of a mixture according to claim 10, for the manufacture of food products.

13. Use of claim 12, or use of a mixture according to claim 10, for the manufacture of a bakery product.

14. Use of a mixture produced according to a method as defined in any one of claims 2 or 3, or use of a mixture according to claim 10, for the sweetening of a beverage.

## Revendications

1. Procédé de fabrication d'un mélange consistant essentiellement en un glucide raffiné et en un composé de magnésium et un composé de calcium, comprenant :
(i) le mélange d'un glucide raffiné avec un composé de magnésium et un composé de calcium,
dans lequel le glucide raffiné est un polysaccharide ; et
l'expression « glucide raffiné » signifie qu'un glucide existant à l'état naturel, nommé également saccharide, est soumis à un raffinage pour être mis à la disposition de l'utilisateur sous la forme d'un produit raffiné, sous forme concentrée et purifiée, le raffinage s'effectuant sous la forme d'une ou plusieurs étapes de procédé, choisies dans le groupe d'étapes de procédé comprenant : l'extraction, la cristallisation, la centrifugation, le broyage, le tamisage, la transformation chimique ; et
l'expression « consistant essentiellement en » signifie que dans le produit raffiné, des substances peuvent être présentes, qui ne sont pas des glucides ou des composés de magnésium ou de calcium mais qui ne sont pas éliminées de celui-ci par le raffinage, lors du processus de raffinage du glucide ;
**caractérisé en ce que**
la teneur en composé de magnésium est de 0,5 à 3,5 % en poids et la teneur en composé de calcium est de 1 à 5 % en poids par rapport à la quantité totale du mélange ;
le composé de magnésium et le composé de calcium étant choisis indépendamment l'un de l'autre dans le groupe consistant en un bicarbonate, un carbonate, un phosphate, un halogénure, un oxyde, un hydroxyde, un tartrate, un citrate, un gluconate, un lactate du magnésium ou du calcium ou un mélange de deux ou plus de ces composés.

2. Procédé selon la revendication 1, dans lequel le glucide raffiné est un disaccharide.

3. Procédé selon la revendication 1 ou 2, dans lequel le glucide raffiné est le saccharose.

4. Procédé selon la revendication 1, dans lequel le glucide raffiné est un amidon.

5. Procédé selon la revendication 1 ou 4, dans lequel l'amidon est une farine de céréale choisie dans le groupe consistant en une farine de blé, d'épeautre, de seigle, d'avoine, d'orge, de millet, de maïs, de riz ou en un mélange de deux ou plus de celles-ci.

6. Procédé selon l'une des revendications précédentes, dans lequel le composé de magnésium et le composé de calcium sont choisis parmi le carbonate de magnésium et le carbonate de calcium.

7. Procédé selon l'une des revendications précédentes, dans lequel le composé de magnésium et le composé de calcium sont mélangés en un rapport en poids de formulation de 1:(1,5 à 3).

8. Procédé selon l'une des revendications précédentes, **caractérisé en ce que** 100 % des particules du composé de magnésium présentent un diamètre inférieur à 90 µm mesuré selon la méthode de diffraction laser et/ou **en ce que** 100 % des particules du composé de calcium présentent un diamètre inférieur à 60 µm mesuré à l'aide d'un compteur de Coulter.

9. Procédé selon l'une des revendications précédentes, comprenant en outre l'étape (ii) de :
(ii) confection du mélange produit à l'étape (i).

10. Mélange consistant essentiellement en un glucide raffiné et en un composé de magnésium et un composé de calcium tel que défini dans l'une des revendications 1 à 9, le glucide raffiné étant le saccharose.

11. Utilisation d'un mélange fabriqué selon un procédé tel que défini dans l'une des revendications 1 à 9, ou d'un mélange selon la revendication 10, pour apporter à un être vivant du magnésium ou du calcium ou du magnésium et du calcium.

12. Utilisation d'un mélange fabriqué selon un procédé tel que défini dans l'une des revendications 1 à 9, ou d'un mélange selon la revendication 10, pour la fabrication d'aliments.

13. Utilisation selon la revendication 12 ou utilisation d'un mélange selon la revendication 10, pour fabriquer un produit de boulangerie.

14. Utilisation d'un mélange fabriqué selon un procédé tel que défini dans l'une des revendications 2 ou 3, ou d'un mélange selon la revendication 10, pour sucrer une boisson.
